# EUROPÄISCHE PATENTSCHRIFT

(11) **EP 2 216 116 B1**
(45) Veröffentlichungstag und Bekanntmachung des Hinweises auf die Patenterteilung: **05.02.2020**
(21) Anmeldenummer: 09014993.1
(22) Anmeldetag: 03.12.2009
(51) Int. Cl.: B23D 49/10, B23D 61/12

(54) **Stichsäge**
JIG SAW
Scie sauteuse

(30) Priorität: 04.02.2009 DE 102009007372
(43) Veröffentlichungstag der Anmeldung: 11.08.2010
(73) Patentinhaber: Mafell AG, 78727 Oberndorf a.N. (DE)
(72) Erfinder: Eisenbeis, Dieter, 72160 Horb-Obertalheim (DE)
(74) Vertreter: Manitz Finsterwald Patent- und Rechtsanwaltspartnerschaft mbB

(56) Entgegenhaltungen:
- EP-A2- 0 261 504
- WO-A1-2008/095451
- DE-A1- 3 447 933
- DE-A1- 19 926 881
- DE-A1-102004 057 821
- DE-A1-102005 025 934
- DE-U1- 8 805 767
- US-A- 1 898 956
- US-A- 4 414 745
- US-A1- 2006 032 553

## Beschreibung

Die vorliegende Erfindung betrifft eine Stichsäge gemäß dem Oberbegriff des Anspruchs 1. Eine solche Stichsäge ist bekannt aus DE102005025934.

Die Anlagefläche ist bei derartigen Stichsägen üblicherweise eben und kann insbesondere durch einen Abschnitt einer Grundplatte gebildet sein. Mittels der Anlagefläche kann die Stichsäge an der Werkstückoberfläche abgestützt und zur Durchführung eines Sägeschnitts in der gewünschten Richtung über das Werkstück geführt werden. Um einen exakten Geradschnitt zu erzielen, ist es auch möglich, die Stichsäge bzw. die Grundplatte an einer Werkstückkante oder einer Führungsschiene anzuschlagen und daran entlangzuführen. Zur Durchführung von Schnitten mit definierter Krümmung sind herkömmliche Stichsägen jedoch nicht ausgebildet, sodass derartige Schnitte kompliziert in der Durchführung und unbefriedigend im Ergebnis sein können.

In der WO 2008/095451 A1 ist eine Stichsäge offenbart, bei der hinter dem Sägeblatt ein Führungsstift von der Grundplatte absteht, welcher in den beim Sägen entstehenden Spalt im Werkstück eingreift und somit zur Schnittführung beiträgt. Sofern sich der Führungsstift nicht exakt hinter dem Sägeblatt befindet, sondern einen seitlichen Versatz aufweist, zwingt er das Sägeblatt beim Sägen auf eine gekrümmte Bahn.

Aufgabe der Erfindung ist es, eine Stichsäge mit erweiterter Funktionalität und verbesserter Schnittqualität bereitzustellen.

Die Lösung dieser Aufgabe erfolgt durch eine Stichsäge mit den Merkmalen des Anspruchs 1.

Erfindungsgemäß ist die Stichsäge in eine Kreisschnittkonfiguration bringbar, in welcher ein von dem Sägeblatt beabstandetes Zirkelelement für einen Eingriff mit der Werkstückoberfläche von der Anlagefläche absteht. Durch das Zirkelelement kann die Anlagefläche der Stichsäge an einem definierten Punkt an der Werkstückoberfläche fixiert werden. Da dieser Punkt von dem Sägeblatt beabstandet ist, kann durch ein Verschieben des Sägeblatts ein kreisbogenförmiger Sägeschnitt durchgeführt werden, wobei sich der Kreismittelpunkt an der Stelle des Eingriffs des Zirkelelements mit der Werkstückoberfläche befindet und die Stichsäge als Ganzes um diesen Punkt gedreht wird. Der Radius des Schnittkreises ist durch den Abstand zwischen dem Sägeblatt und dem Zirkelelement vorgegeben. Auf diese Weise werden die Einsatzmöglichkeiten einer handelsüblichen Stichsäge wesentlich erweitert. Beispielsweise ist es möglich, im Rahmen der Elektroinstallation Aufnahmelöcher für Hohlraumdosen in Trockenbauwände zu sägen. Separate Spezialwerkzeuge zum Sägen derartiger Löcher werden dadurch entbehrlich. Ein Zirkelelement kann kostengünstig bereitgestellt und auf einfache Weise an der Anlagefläche, also beispielsweise an der Grundplatte, angebracht werden. Somit ist die erfindungsgemäße Stichsäge einfach in der Herstellung, da eine herkömmliche Stichsäge nur geringfügig angepasst werden muss.

Erfindungsgemäß ist das Zirkelelement in der Kreisschnittkonfiguration in Bezug auf eine durch das Sägeblatt vorgegebene Arbeitsrichtung derart seitlich von dem Sägeblatt beabstandet, dass durch ein Verschieben des Sägeblatts bei Fixierung der Anlagefläche an einem definierten Punkt der Werkstückoberfläche durch das Zirkelelement ein Schnittkreis erzeugbar ist, dessen Kreismittelpunkt sich an der Stelle des Eingriffs des Zirkelelements mit der Werkstückoberfläche befindet und dessen Radius durch den Abstand zwischen dem Sägeblatt und dem Zirkelelement vorgegeben ist. Hierdurch ist gewährleistet, dass die Schnittführung stets in der korrekten Arbeitsrichtung erfolgt, bei einem flachen Sägeblatt also stets in Richtung der Sägezahnung.

Bevorzugt ist das abstehende Zirkelelement derart an der Anlagefläche vorsehbar, dass der durch das Zirkelelement definierte Kreismittelpunkt in Arbeitsrichtung gesehen relativ zur Arbeitsseite des Sägeblatts zurückversetzt ist. Das Sägeblatt ist also gewissermaßen voreilend angeordnet, sodass der Rücken des Sägeblatts in Bezug auf die Kreislinie stets um einen gewissen Betrag nach innen versetzt ist. Hierdurch wird die Klemmneigung verringert und die Schnittführung erleichtert.

Gemäß einer Ausführungsform ist das abstehende Zirkelelement beidseitig des Sägeblatts an der Anlagefläche vorsehbar. Die Flexibilität der Stichsäge wird dadurch weiter erhöht, da die Durchführung des Kreisschnitts in beiden Richtungen möglich ist. Dies kann insbesondere dann wichtig sein, wenn die Handhabung der Säge in einer der beiden Richtungen aufgrund von Hindernissen erschwert ist.

Das abstehende Zirkelelement kann auch in unterschiedlichen Abständen von dem Sägeblatt an der Anlagefläche vorsehbar sein. Beispielsweise können Befestigungs- oder Aufnahmevorrichtungen in zwei oder mehreren Abständen vom Sägeblatt an der Anlagefläche vorgesehen sein, um das Zirkelelement an der jeweiligen Stelle anzubringen. Es können dann Kreisbögen von unterschiedlichem Radius gesägt werden, zum Beispiel um Aufnahmelöcher für unterschiedlich große Hohlraumdosen zu schaffen. Alternativ kann das Zirkelelement auch derart an der Anlagefläche vorsehbar sein, dass sein Abstand vom Sägeblatt innerhalb eines vorgegebenen Bereichs stufenlos verstellbar ist.

Gemäß einer Ausgestaltung der Erfindung umfasst das Zirkelelement für den Eingriff mit der Werkstückoberfläche eine dorn- oder nadelartige Spitze. Die Spitze kann einfach und schnell in die Werkstückoberfläche eingedrückt werden und sorgt für eine sichere Fixierung der Stichsäge.

Alternativ kann das Zirkelelement für den Eingriff mit der Werkstückoberfläche einen stumpfen, insbesondere zylindrischen Steckabschnitt umfassen. Ein derartiger Steckabschnitt kann in eine zuvor erstellte Bohrung eingesteckt werden und so als Schwenkachse für die Stichsäge dienen.

Die Stichsäge kann ferner in eine Normalkonfiguration bringbar sein, in welcher das Zirkelelement nicht von der Anlagefläche absteht. In der Normalkonfiguration kann die Stichsäge in gewohnter Weise zur Durchführung von geraden Schnitten oder frei geführten Schnitten eingesetzt werden, ohne dass von der Anlagefläche abstehende Teile die flächige Abstützung der Stichsäge an der Werkstückoberfläche behindern.

Gemäß einer Ausführungsform ist das Zirkelelement von der Anlagefläche abnehmbar. Die Stichsäge kann dann besonders einfach und schnell in die Normalkonfiguration gebracht werden, indem das Zirkelelement entfernt wird. Alternativ kann das Zirkelelement auch in die Grundplatte oder in einen Gehäuseabschnitt der Stichsäge einschiebbar oder einklappbar sein.

Gemäß einer Ausgestaltung der Erfindung ist die Anlagefläche an einer Grundplatte der Stichsäge ausgebildet. Das Zirkelelement kann auf vielfältige unterschiedliche Arten dauerhaft oder abnehmbar an einer derartigen Grundplatte angebracht werden.

Vorzugsweise weist die Grundplatte wenigstens eine Ausnehmung auf, mit der das Zirkelelement in Eingriff bringbar, insbesondere in diese einsteckbar oder einschraubbar, ist. Eine derartige Ausnehmung ist besonders einfach und kostengünstig herstellbar und kann auf vorteilhafte Weise in bestehende Grundplatten von Stichsägen integriert werden.

Gemäß einer Ausführungsform ist das Zirkelelement verschiebbar in der Ausnehmung aufgenommen und weist eine Federvorspannung in Richtung der Kreisschnittkonfiguration auf. Bei einem Andrücken der Anlagefläche gegen eine Werkstückoberfläche wird das Zirkelelement - das in diesem Fall zweckmäßigerweise mit einer ebenen Stirnfläche versehen ist - vollständig in die Ausnehmung hineingeschoben und ermöglicht so ein ungehindertes Gleiten der Anlagefläche über die Werkstückoberfläche. Sobald das Zirkelelement jedoch über einer passenden Bohrung in der Werkstückoberfläche positioniert wird, schnappt es aufgrund der Federvorspannung selbsttätig in diese ein und stellt somit die Kreisschnittkonfiguration her. Alternativ kann das Zirkelelement auch in der Ausnehmung verrastbar sein. Beispielsweise kann sowohl für die Kreisschnittkonfiguration als auch für die Normalkonfiguration eine jeweilige Raststellung vorgesehen sein, wobei durch einen Druck auf die Stirnfläche des Zirkelelements zwischen den beiden Raststellungen gewechselt werden kann. Die beiden letztgenannten Ausführungsformen haben insbesondere den Vorteil, dass das Zirkelelement nie entfernt werden muss und folglich auch nicht verloren gehen kann. Gemäß einer weiteren alternativen Ausführungsform erfolgt die Halterung des Zirkelelements in der Ausnehmung mittels eines relativ strammen Gleitsitzes. Besonders günstig ist es in dieser Hinsicht, wenn das Zirkelelement durch elastische Elemente in der Ausnehmung gehalten wird. Hier kann auf vorteilhafte Weise der Umstand genutzt werden, dass bei vielen Stichsägen der gattungsgemäßen Art eine Grundplatte aus Metall mit einer an der Unterseite vorgesehenen Kunststoffsohle vorhanden ist. Ein der Kunststoffsohle zugeordneter Teil der Ausnehmung kann nämlich z.B. am Umfangsrand nasenartige Halteelemente aufweisen, welche federnd gegen die Oberfläche eines in die Ausnehmung gesteckten Zirkelelements drücken und dieses so ausreichend fixieren.

Es kann weiterhin ein mit der Anlagefläche flächenbündiger Schieber mit einer entsprechenden Ausnehmung vorgesehen sein. Beispielsweise kann der Schieber in einer Aufnahmeschiene der Grundplatte aufgenommen sein und relativ zum Sägeblatt seitlich verschiebbar sein. Ein derartiger Schieber ermöglicht eine stufenlose Verstellung des Kreisdurchmessers. Durch Vorsehen mehrerer Ausnehmungen in dem Schieber kann die Flexibilität bei der Durchmessereinstellung weiter gesteigert werden.

Die Ausnehmung kann beispielsweise als Durchgangsbohrung ausgebildet sein. Eine Durchgangsbohrung ist besonders leicht herstellbar und gewährleistet überdies auf einfache Weise, dass der Ort des Zirkelelements und somit der Kreismittelpunkt für den Bediener von oben erkennbar ist.

Die Durchgangsbohrung kann ferner gleichzeitig zur Aufbewahrung des Zirkelelements in einer Normalkonfiguration ausgebildet sein. Das Zirkelelement kann beispielsweise von oben in die Durchgangsbohrung gesteckt oder geschraubt werden, um die Normalkonfiguration mit ebener Anlagefläche herzustellen. Zum Überführen der Stichsäge in die Kreisschnittkonfiguration wird das Zirkelelement nach oben aus der Durchgangsbohrung entnommen und wiederum von unten in diese eingesteckt oder eingeschraubt. Die Durchgangsbohrung kann eine Schulter aufweisen, die mit einem Ansatz des Zirkelelements zusammenwirkt, um die korrekte Tiefe des Zirkelelements innerhalb der Durchgangsbohrung festzulegen. Die Durchgangsbohrung kann sich ferner nach oben hin erweitern, sodass ein Endstück eines von unten in die Durchgangsbohrung eingesteckten Zirkelelements aus der Oberseite der Grundplatte herausragt. Das Zirkelelement kann auf diese Weise von einem Bediener bequem mit dem Finger nach unten herausgedrückt werden.

Das Sägeblatt kann ferner von der Arbeitsseite zum Rücken hin verjüngt sein, wobei insbesondere das Sägeblatt in einer Ebene parallel zur Anlagefläche einen V-förmigen oder trapezförmigen Querschnitt aufweist. Eine derartige Ausbildung des Sägeblatts unterstützt in besonderer Weise das Durchführen von gekrümmten Schnitten, da der Druck der nicht schneidenden Seitenwangen auf das Werkstück verringert wird und somit Reibung und Klemmneigung des Sägeblatts herabgesetzt werden.

Das Sägeblatt kann aus wenigstens zwei seitlich nebeneinander angeordneten Sägeblättern zusammengesetzt sein, welche insbesondere miteinander verlötet sind, bevorzugt durch eine ganzflächige Hartlötung. Grundsätzlich können die beiden Sägeblätter auf eine beliebige Weise kraft- und/oder formschlüssig miteinander verbunden sein. Die Ausbildung des Sägeblatts aus zwei Einzelsägeblättern hat den Vorteil, dass auch feine und komplexe Verzahnungsstrukturen herstellbar sind, welche andernfalls bei einem relativ breiten einteiligen Sägeblatt nicht zu realisieren wären. Außerdem wird die Herstellung des Sägeblatts auf diese Weise wesentlich vereinfacht, da kein eigenes Bauteil konstruiert und gefertigt werden muss, sondern lediglich zwei handelsübliche Sägeblätter zusammenzusetzen und zu bearbeiten sind.

Vorzugsweise ist die Verjüngung durch Schleifen der Seitenwangen im zusammengesetzten Zustand hergestellt, wobei insbesondere die Seitenwangen vollflächig, insbesondere die Seiten der Sägezahnung einschließend, geschliffen sind. Durch das ganzflächige Überschleifen der Seitenwangen wird eine hohe Oberflächengüte erreicht, die einer exakten Schnittführung entgegenkommt.

Vorzugsweise stehen die Seitenwangen in einem Winkel von wenigstens 10° zueinander. Ein Winkel in dieser Größenordnung hat sich in der Praxis als vorteilhaft erwiesen. Gemäß einer besonders bevorzugten Ausführungsform stehen die Seitenwangen in einem Winkel von 2x8° = 16° zueinander.

Mögliche Weiterbildungen der Erfindung sind in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: eine vereinfachte Ansicht einer erfindungsgemäßen Stichsäge von unten;
- Fig. 2: eine Teilansicht einer erfindungsgemäßen Stichsäge gemäß einer ersten Ausführungsform von vorn;
- Fig. 3: eine Teilansicht einer erfindungsgemäßen Stichsäge gemäß einer zweiten Ausführungsform von vorn;
- Fig. 4: eine perspektivische Darstellung eines Sägeblatts;
- Fig. 5: eine Ansicht des Sägeblatts gemäß Fig. 4 von der Seite;
- Fig. 6: eine Ansicht des Sägeblatts gemäß Fig. 4 von hinten; und
- Fig. 7: eine Ansicht des Sägeblatts gemäß Fig. 4 von unten.

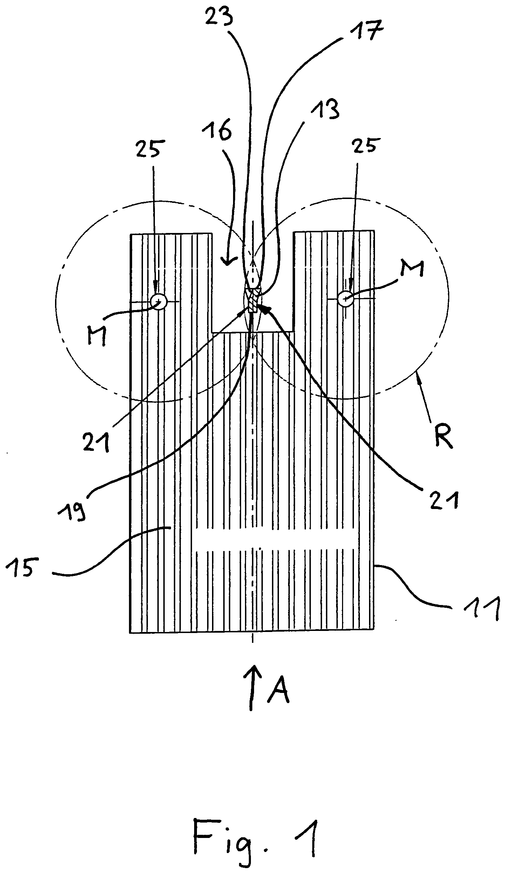

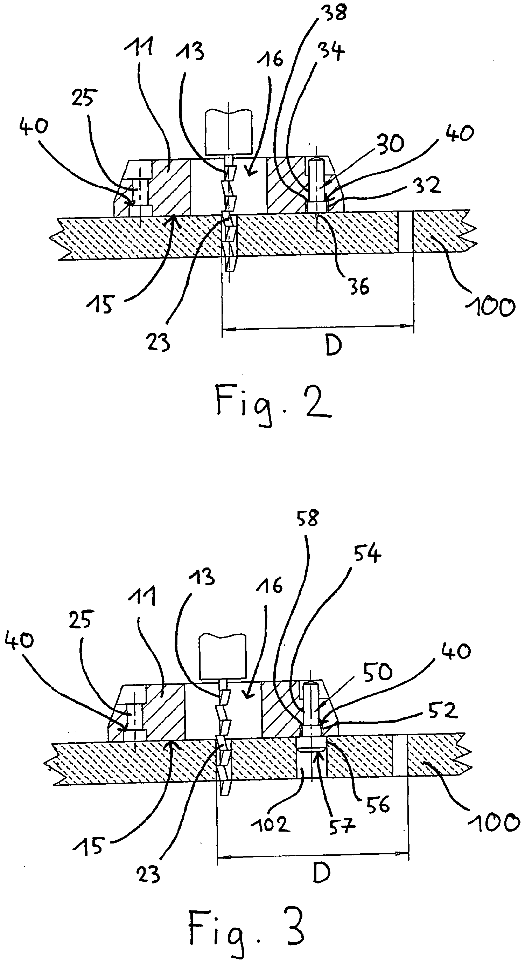

Unter Bezugnahme auf die Fig. 1 und 2 wird eine erste Ausführungsform einer erfindungsgemäßen Stichsäge beschrieben, welche eine Grundplatte 11 und ein Sägeblatt 13 aufweist. Durch die Unterseite der Grundplatte 11 wird eine ebene Anlagefläche 15 definiert. Wie aus Fig. 1 hervorgeht, ist das Sägeblatt 13 in einer Ausnehmung 16 der Grundplatte 11 angeordnet und steht rechtwinklig von der Anlagefläche 15 ab. Das Sägeblatt 13 ist in einer nicht näher dargestellten Haltevorrichtung befestigt und wird durch einen nicht dargestellten Motor auf- und abgehend angetrieben. Zur Verbesserung der Sägeleistung kann auch eine Pendelhubsteuerung vorgesehen sein. Das Sägeblatt 13 weist eine Arbeitsseite 17, einen Rücken 19 und zwei Seitenwangen 21 auf. Die Arbeitsseite 17 ist mit einer Sägezahnung 23 ausgestattet. Durch die Sägezahnung 23 ist eine Arbeitsrichtung A für die Stichsäge vorgegeben. Beidseitig des Sägeblatts 13 sind Aufnahmebohrungen 25 an der Grundplatte 11 vorgesehen, welche sich jeweils auf gleicher Höhe mit dem Sägeblatt 13 befinden, aber um einen gleichen vorgegebenen Betrag seitlich von diesem beabstandet sind. In jede der Aufnahmebohrungen 25 ist gemäß Fig. 2 ein Zirkelelement 30 einsteckbar, welches einen ersten Führungsabschnitt 32, einen zweiten Führungsabschnitt 34 und eine dornartige Spitze 36 umfasst. Der erste Führungsabschnitt 32 ist in Bezug auf den zweiten Führungsabschnitt 34 erweitert, sodass sich ein Ansatz 38 ergibt. Die Aufnahmebohrungen 25 weisen jeweils eine entsprechende Schulter 40 für einen Eingriff mit dem Ansatz 38 des Zirkelelements 30 auf.

Wie aus Fig. 1 hervorgeht, definieren die Aufnahmebohrungen 25 jeweils einen Kreismittelpunkt M für ein Zirkelelement 30, der in Arbeitsrichtung A gesehen relativ zu der Arbeitsseite 17 des Sägeblatts 13 zurückversetzt ist. Das Sägeblatt 13 eilt also sozusagen vor und es ergibt sich ein Abstand zwischen dem Rücken 19 des Sägeblatts 13 und der Kreislinie.

Bei der in Fig. 2 dargestellten Kreisschnittkonfiguration der Stichsäge sitzt des Zirkelelement 30 derart in der Aufnahmebohrung 25 der Grundplatte 11, dass lediglich die Spitze 36 von der Anlagefläche 15 absteht. Bei einem Andrücken der Grundplatte 11 gegen die Oberfläche eines Werkstücks 100 dringt somit die Spitze 36 in das Material des Werkstücks 100 ein und bewirkt eine zirkelartige Fixierung der Stichsäge gegenüber dem Werkstück 100. In der Kreisschnittkonfiguration kann demgemäß ein Kreisschnitt mit dem Radius R bzw. mit dem Durchmesser D durchgeführt werden.

Zum Überführen der Stichsäge in eine Normalkonfiguration wird die Grundplatte 11 von der Oberfläche des Werkstücks 100 entfernt und das Zirkelelement 30 wird nach unten aus der Aufnahmebohrung 25 herausgezogen. Bei abgenommenem Zirkelelement 30 stehen keine Teile von der Anlagefläche 15 ab und die Stichsäge kann in gewohnter Weise frei oder an einer Führungsschiene über die Werkstückoberfläche geführt werden. Da die Aufnahmebohrung 25 als Durchgangsbohrung ausgebildet ist, kann das abgenommene Zirkelelement 30 zur Aufbewahrung von oben in die Aufnahmebohrung 25 gesteckt werden, wo es jederzeit für einen erneuten Gebrauch zur Verfügung steht.

Da auf jeder Seite des Sägeblatts 13 eine Aufnahmebohrung 25 zur Verfügung steht, kann der Bediener der Stichsäge jeweils auswählen, in welcher Richtung er den Kreisschnitt ausführen will, und das Zirkelelement 30 kann in die entsprechende Aufnahmebohrung 25 gesteckt werden.

Unter Bezugnahme auf Fig. 3 wird eine zweite Ausführungsform der Erfindung beschrieben. Die Stichsäge, einschließlich der Grundplatte 11, des Sägeblatts 13 und der Anlagefläche 15, ist identisch ausgebildet wie bei der Ausführungsform gemäß den Fig. 1 und 2. Das Zirkelelement 50 umfasst hier einen ersten Führungsabschnitt 52, einen zweiten Führungsabschnitt 54 und einen zylindrischen Steckabschnitt 56. Wie bei der ersten Ausführungsform ist der erste Führungsabschnitt 52 in Bezug auf den zweiten Führungsabschnitt 54 erweitert, sodass sich ein Ansatz 58 für einen Eingriff mit der Schulter 40 der jeweiligen Aufnahmebohrung 25 ergibt. In der in Fig. 3 dargestellten Kreisschnittkonfiguration steht der zylindrische Steckabschnitt 56 rechtwinklig von der Anlagefläche 15 der Grundplatte 11 ab und kann dementsprechend in eine passend vorbereitete Bohrung 102 in dem Werkstück 100 eingeführt werden. Die Stirnseite 57 des Steckabschnitts 56 ist wie dargestellt leicht abgeschrägt, um die Einführung in die Bohrung 102 zu erleichtern. Der Steckabschnitt 56 kann gleitend in der Bohrung 102 rotieren und stellt so eine Schwenkverbindung zwischen der Grundplatte 11 und dem Werkstück 100 her.

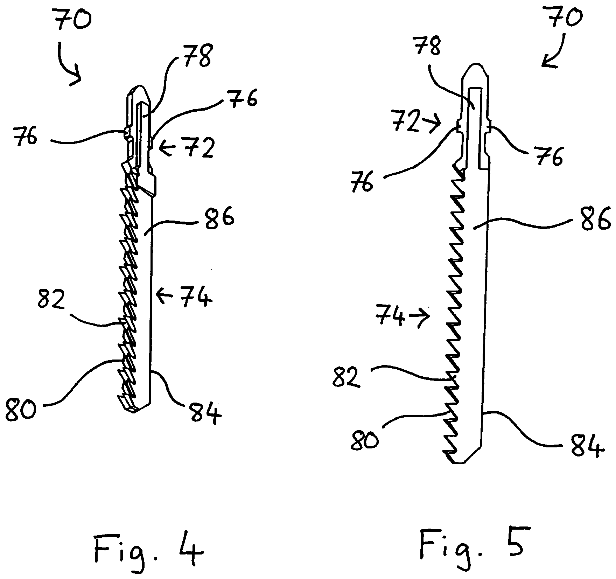

Unter Bezugnahme auf die Fig. 4 bis 7 wird ein Sägeblatt 70 beschrieben, das in besonderer Weise für den Gebrauch mit einer Stichsäge gemäß den offenbarten Ausführungsformen der Fig. 1 bis 3 geeignet, aber nicht ausschließlich für eine solche "Zirkelfunktion" vorgesehen ist. Vielmehr kann das Sägeblatt 70 auch für ein herkömmliches - geführtes oder ungeführtes - Arbeiten mit einer Stichsäge verwendet werden, besonders vorteilhaft dann, wenn gekrümmte Schnitte herzustellen sind. Auch bei geführten Geradschnitten, also z.B. beim Sägen entlang einer geraden Führungsschiene, weist das erfindungsgemäße Sägeblatt 70 Vorteile auf. Insbesondere wird die Schnittqualität verbessert und die Neigung des Sägeblatts zum "Ausbrechen" verringert.

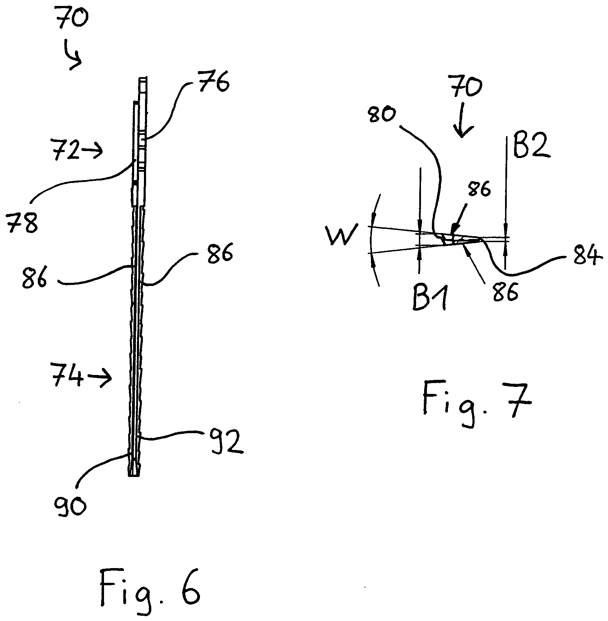

Das Sägeblatt 70 ist in einen oberen Befestigungsabschnitt 72 und in einen unteren Arbeitsabschnitt 74 unterteilt. Der Befestigungsabschnitt 72 weist umfangsseitige Profilelemente 76 sowie seitliche Profilelemente 78 auf, die der Halterung in einem entsprechenden Aufnahmeabschnitt eines Stößels der Stichsäge dienen und an das jeweilige Stichsägenmodell angepasst sind. Der Arbeitsabschnitt 74 des Sägeblatts 70 weist eine Arbeitsseite 80 mit einer Sägezahnung 82, einen Rücken 84 sowie zwei Seitenwangen 86 auf. Wie insbesondere aus Fig. 7 hervorgeht, ist das Sägeblatt 70 von der Arbeitsseite 80 zum Rücken 84 hin von einer Anfangsbreite B1 bis zu einer Endbreite B2 verjüngt, sodass sich in einer Ebene parallel zur Anlagefläche 15 ein V-förmiger oder trapezförmiger Querschnitt ergibt. Die beiden Seitenwangen 86 stehen also in einem definierten Verjüngungswinkel W relativ zueinander. Im dargestellten Beispiel beträgt dieser Winkel 12°. In der Praxis hat sich ein Winkel von 16° als besonders günstig erwiesen.

Das Sägeblatt 70 ist aus zwei seitlich nebeneinander angeordneten Einzelsägeblättern 90, 92 zusammengesetzt, welche beispielsweise durch eine ganzflächige Hartlötung fest miteinander verbunden sind. Die beiden Einzelsägeblätter 90, 92 sind allgemein gebräuchliche Sägeblätter für Stichsägen, welche nach der Verlötung vollflächig überschliffen wurden, um die Stellung der Seitenwangen 86 in dem Verjüngungswinkel W relativ zueinander herzustellen.

Das Sägeblatt 70 eignet sich besonders zur Durchführung von gekrümmten Sägeschnitten, insbesondere von Kreisschnitten, welche mit einem Zirkelelement gemäß den zuvor dargestellten Ausführungsformen durchgeführt werden. Die Schnittqualität wird aber auch allgemein bei gekrümmten Schnitten und - wie erwähnt - bei geführten geradlinigen Schnitten verbessert, da der nicht schneidende Bereich der Seitenwangen 86 stets von dem Material des Werkstücks 100 beabstandet ist und das Sägeblatt gewissermaßen "leichter um die Kurve kommt".

### Bezugszeichenliste

- 11: Grundplatte
- 13: Sägeblatt
- 15: Anlagefläche
- 16: Ausnehmung
- 17: Arbeitsseite
- 19: Rücken
- 21: Seitenwangen
- 23: Sägezahnung
- 25: Aufnahmebohrung
- 30: Zirkelelement
- 32: erster Führungsabschnitt
- 34: zweiter Führungsabschnitt
- 36: Spitze
- 38: Ansatz
- 40: Schulter
- 50: Zirkelelement
- 52: erster Führungsabschnitt
- 54: zweiter Führungsabschnitt
- 56: Steckabschnitt
- 57: Stirnseite
- 58: Ansatz
- 70: Sägeblatt
- 72: Befestigungsabschnitt
- 74: Arbeitsabschnitt
- 76: Profilelement
- 78: Profilelement
- 80: Arbeitsseite
- 82: Sägezahnung
- 84: Rücken
- 86: Seitenwangen
- 90: Einzelsägeblatt
- 92: Einzelsägeblatt
- 100: Werkstück
- 102: Bohrung

- A: Arbeitsrichtung
- M: Kreismittelpunkt
- R: Kreisschnittradius
- D: Kreisschnittdurchmesser
- W: Verjüngungswinkel
- B1: Anfangsbreite
- B2: Endbreite

## Patentansprüche

1. Stichsäge mit
einer Anlagefläche (15), die zum Anlegen der Stichsäge an eine Werkstückoberfläche ausgebildet ist, und
einem Sägeblatt (13), wobei
die Stichsäge in eine Kreisschnittkonfiguration bringbar ist, in welcher ein von dem Sägeblatt (13) beabstandetes Zirkelelement (30, 50) für einen Eingriff mit der Werkstückoberfläche von der Anlagefläche (15) absteht,
**dadurch gekennzeichnet, dass**
die Anlagefläche (15) an einer Grundplatte (11) der Stichsäge ausgebildet ist, wobei die Grundplatte (11) wenigstens eine Ausnehmung (25) aufweist, mit der das Zirkelelement (30, 50) in Eingriff bringbar ist, wobei beidseitig des Sägeblatts (13) Aufnahmebohrungen (25) als Ausnehmungen an der Grundplatte (11) vorgesehen sind, welche sich jeweils auf gleicher Höhe mit dem Sägeblatt (13) befinden, aber um einen gleichen vorgegebenen Betrag seitlich von diesem beabstandet sind, wobei in jede der Aufnahmebohrungen (25) ein Zirkelelement (30, 50) einsteckbar ist.

2. Stichsäge nach Anspruch 1,
**dadurch gekennzeichnet, dass**
das Zirkelelement (30, 50) in der Kreisschnittkonfiguration in Bezug auf eine durch das Sägeblatt (13) vorgegebene Arbeitsrichtung (A) seitlich von dem Sägeblatt (13) beabstandet ist.

3. Stichsäge nach Anspruch 2,
**dadurch gekennzeichnet, dass**
das abstehende Zirkelelement (30, 50) derart an der Anlagefläche (15) vorsehbar ist, dass der durch das Zirkelelement (30, 50) definierte Kreismittelpunkt (M) in Arbeitsrichtung (A) gesehen relativ zur Arbeitsseite (17) des Sägeblatts (13) zurückversetzt ist.

4. Stichsäge nach zumindest einem der vorstehenden Ansprüche,
**dadurch gekennzeichnet, dass**
das abstehende Zirkelelement (30, 50) in unterschiedlichen Abständen von dem Sägeblatt (13) an der Anlagefläche (15) vorsehbar ist.

5. Stichsäge nach zumindest einem der vorstehenden Ansprüche,
**dadurch gekennzeichnet, dass**
das Zirkelelement (30) für den Eingriff mit der Werkstückoberfläche eine dorn- oder nadelartige Spitze (36) umfasst.

6. Stichsäge nach zumindest einem der vorstehenden Ansprüche,
**dadurch gekennzeichnet, dass**
das Zirkelelement (50) für den Eingriff mit der Werkstückoberfläche einen stumpfen, insbesondere zylindrischen, Steckabschnitt (56) umfasst.

7. Stichsäge nach zumindest einem der vorstehenden Ansprüche,
**dadurch gekennzeichnet, dass**
die Stichsäge ferner in eine Normalkonfiguration bringbar ist, in welcher das Zirkelelement (30, 50) nicht von der Anlagefläche (15) absteht.

8. Stichsäge nach zumindest einem der vorstehenden Ansprüche,
**dadurch gekennzeichnet, dass**
das Zirkelelement (30, 50) von der Anlagefläche (15) abnehmbar ist.

9. Stichsäge nach zumindest einem der vorstehenden Ansprüche,
**dadurch gekennzeichnet, dass**
die Ausnehmung (25) als Durchgangsbohrung ausgebildet ist,
wobei insbesondere die Durchgangsbohrung (25) gleichzeitig zur Aufbewahrung des Zirkelelements (30, 50) in einer Normalkonfiguration ausgebildet ist.

10. Stichsäge nach zumindest einem der vorstehenden Ansprüche,
**dadurch gekennzeichnet, dass**
das Sägeblatt (70) eine eine Sägezahnung (82) aufweisende Arbeitsseite (80),
einen Rücken (84) und
zwei Seitenwangen (86) aufweist, wobei
das Sägeblatt (70) von der Arbeitsseite (80) zum Rücken (84) hin verjüngt ist, wobei insbesondere das Sägeblatt (70) in einer Ebene parallel zur Anlagefläche (15) einen V-förmigen oder trapezförmigen Querschnitt aufweist.

11. Stichsäge nach Anspruch 10,
**dadurch gekennzeichnet, dass**
das Sägeblatt (70) aus wenigstens zwei seitlich nebeneinander angeordneten Sägeblättern (90, 92) zusammengesetzt ist, welche insbesondere miteinander verlötet sind, bevorzugt durch eine ganzflächige Hartlötung.

12. Stichsäge nach Anspruch 10 oder 11,
**dadurch gekennzeichnet, dass**
die Verjüngung durch Schleifen der Seitenwangen (86) im zusammengesetzten Zustand hergestellt ist, wobei insbesondere die Seitenwangen (86) vollflächig, insbesondere die Seiten der Sägezahnung (82) einschließend, geschliffen sind.

13. Stichsäge nach zumindest einem der Ansprüche 10 bis 12,
**dadurch gekennzeichnet, dass**
die Seitenwangen (86) in einem Winkel von wenigstens 10° zueinander stehen.

## Claims

1. A jig saw comprising
a contact surface (15) which is configured for placing the jig saw at a workpiece surface; and
a saw blade (13), wherein
the jig saw can be brought into a circular cut configuration in which a compass element (30, 50) spaced apart from the saw blade (13) projects from the contact surface (15) for an engagement with the workpiece surface,
**characterized in that**
the contact surface (15) is formed at a base plate (11) of the jig saw, with the base plate (11) having at least one recess (25) with which the compass element (30, 50) can be brought into engagement, with, at both sides of the saw blade (13), reception bores (25) being provided as recesses at the base plate (11) which are in each case at the same level as the saw blade (13), but are laterally spaced apart therefrom by a uniform predefined amount, with a compass element (30, 50) being able to be plugged into each of the reception bores (25).

2. A jig saw in accordance with claim 1,
**characterized in that**,
in the circular cut configuration, the compass element (30, 50) is laterally spaced apart from the saw blade (13) with respect to a direction of work (A) predefined by the saw blade (13).

3. A jig saw in accordance with claim 2,
**characterized in that**
the projecting compass element (30, 50) can be provided at the contact surface (15) such that the circle center (M) defined by the compass element (30, 50) is set back relative to a work side (17) of the saw blade (13), viewed in the direction of work (A).

4. A jig saw in accordance with at least one of the preceding claims,
**characterized in that**
the projecting compass element (30, 50) can be provided at the contact surface (15) at different spacings from the saw blade (13).

5. A jig saw in accordance with at least one of the preceding claims,
**characterized in that**
the compass element (30) comprises a mandrel-like or needle-like tip (36) for the engagement with the workpiece surface.

6. A jig saw in accordance with at least one of the preceding claims,
**characterized in that**
the compass element (50) comprises a blunt plug-in section (56), which is in particular cylindrical, for the engagement with the workpiece surface.

7. A jig saw in accordance with at least one of the preceding claims,
**characterized in that**
the jig saw can further be brought into a normal configuration in which the compass element (30, 50) does not project from the contact surface (15).

8. A jig saw in accordance with at least one of the preceding claims,
**characterized in that**
the compass element (30, 50) is removable from the contact surface (15).

9. A jig saw in accordance with at least one of the preceding claims,
**characterized in that**
the recess (25) is configured as a passage bore,
with in particular the passage bore (25) simultaneously being configured to store the compass element (30, 50) in a normal configuration.

10. A jig saw in accordance with at least one of the preceding claims,
**characterized in that**
the saw blade (70) has a work side (80) having a saw toothed arrangement (82);
a back (84); and
two side elements (86), with
the saw blade (70) being tapered from the work side (80) toward the back (84), with in particular the saw blade (70) having a V-shaped or trapezoidal cross-section in a plane in parallel with the contact surface (15).

11. A jig saw in accordance with claim 10,
**characterized in that**
the saw blade (70) is assembled from at least two saw blades (90, 92) which are arranged laterally next to one another and which are in particular soldered to one another, preferably by a full-surface brazing.

12. A jig saw in accordance with claim 10 or claim 11,
**characterized in that**
the tapered portion is produced by grinding the side elements (86) in an assembled state, with in particular the side elements (86) being ground over the full area, in particular including the sides of the saw toothed arrangement (82).

13. A jig saw in accordance with at least one of the claims 10 to 12,
**characterized in that**
the side elements (86) are at an angle of at least 10° with respect to each other.

## Revendications

1. Scie sauteuse comportant
une surface d'appui (15) qui est réalisée pour appliquer la scie sauteuse contre une surface d'une pièce à œuvrer, et
une lame de scie (13),
dans laquelle
la scie sauteuse peut être amenée dans une configuration de coupe circulaire dans laquelle un élément formant compas (30, 50) circulaire espacé de la lame de scie (13) fait saillie de la surface d'appui (15) pour s'engager avec la surface de la pièce à œuvrer,
**caractérisée en ce que**
la surface d'appui (15) est réalisée sur une plaque de base (11) de la scie sauteuse, la plaque de base (11) présentant au moins un évidement (25) avec lequel l'élément formant compas (30, 50) peut être amené en engagement, des perçages de réception (25) étant prévus de part et d'autre de la lame de scie (13) à titre d'évidements sur la plaque de base (11) qui se trouvent chacun à la même hauteur que la lame de scie (13) mais qui sont latéralement espacés de celle-ci de la même valeur prédéterminée, un élément formant compas (30, 50) pouvant être enfiché dans chacun des perçages de réception (25).

2. Scie sauteuse selon la revendication 1,
**caractérisée en ce que**
dans la configuration de coupe circulaire, l'élément formant compas (30, 50) est espacé latéralement de la lame de scie (13) par rapport à une direction de travail (A) prédéterminée par la lame de scie (13).

3. Scie sauteuse selon la revendication 2,
**caractérisée en ce que**
l'élément formant compas (30, 50) en saillie peut être prévu sur la surface d'appui (15) de telle sorte que le centre du cercle (M) défini par l'élément formant compas (30, 50) et vu en direction de travail (A) est décalé en retrait par rapport au côté travail (17) de la lame de scie (13).

4. Scie sauteuse selon l'une au moins des revendications précédentes,
**caractérisée en ce que**
l'élément formant compas (30, 50) en saillie peut être prévu sur la surface d'appui (15) à différentes distances par rapport à la lame de scie (13).

5. Scie sauteuse selon l'une au moins des revendications précédentes,
**caractérisée en ce que**
l'élément formant compas (30) comprend une pointe (36) en forme de mandrin ou d'aiguille pour l'engagement avec la surface de la pièce à œuvrer.

6. Scie sauteuse selon l'une au moins des revendications précédentes,
**caractérisée en ce que**
l'élément formant compas (50) comprend une portion d'enfichage (56) émoussée, en particulier cylindrique, pour l'engagement avec la surface de la pièce à œuvrer.

7. Scie sauteuse selon l'une au moins des revendications précédentes,
**caractérisée en ce que**
la scie sauteuse peut en outre être amenée dans une configuration normale dans laquelle l'élément formant compas (30, 50) ne fait pas saillie de la surface d'appui (15).

8. Scie sauteuse selon l'une au moins des revendications précédentes,
**caractérisée en ce que**
l'élément formant compas (30, 50) est amovible de la surface d'appui (15).

9. Scie sauteuse selon l'une au moins des revendications précédentes,
**caractérisée en ce que**
l'évidement (25) est réalisé sous forme de perçage traversant, et en particulier le perçage traversant (25) est réalisé simultanément pour maintenir l'élément formant compas (30, 50) dans une configuration normale.

10. Scie sauteuse selon l'une au moins des revendications précédentes,
**caractérisée en ce que**
la lame de scie (70) présente
un côté travail (80) présentant une denture de scie (82),
un dos (84) et
deux joues latérales (86),
la lame de scie (70) étant rétrécie depuis le côté travail (80) vers le dos (84), en particulier la lame de scie (70) présentant une section transversale en forme de V ou trapézoïdale dans un plan parallèle à la surface d'appui (15).

11. Scie sauteuse selon la revendication 10,
**caractérisée en ce que**
la lame de scie (70) est composée d'au moins deux lames de scie (90, 92) disposées latéralement l'une à côté de l'autre qui sont en particulier assemblées par brasage, de préférence par un brasage fort sur la totalité de la surface.

12. Scie sauteuse selon la revendication 10 ou 11,
**caractérisée en ce que**
le rétrécissement est réalisé par meulage des joues latérales (86) dans l'état assemblé, en particulier les joues latérales (86) étant meulées sur la totalité de la surface, en particulier y compris les côtés de la denture de scie (82).

13. Scie sauteuse selon l'une au moins des revendications 10 à 12,
**caractérisée en ce que**
les joues latérales (86) sont disposées sous un angle d'au moins 10° l'une par rapport à l'autre.
